Europäisches Patentamt

(19) European Patent Office

Office européen des brevets

(11) Publication number: **0 102 987**
**B1**

(12) **EUROPEAN PATENT SPECIFICATION**

(45) Date of publication of patent specification: **29.01.86**

(21) Application number: **83900859.6**

(22) Date of filing: **08.03.83**

(86) International application number:
**PCT/SE83/00078**

(87) International publication number:
**WO 83/03117 15.09.83 Gazette 83/21**

(51) Int. Cl.⁴: **E 06 B 7/02, F 24 F 13/18**

(54) **AN ARRANGEMENT IN WINDOWS.**

(30) Priority: **08.03.82 SE 8201434**

(43) Date of publication of application:
**21.03.84 Bulletin 84/12**

(45) Publication of the grant of the patent:
**29.01.86 Bulletin 86/05**

(84) Designated Contracting States:
**DE FR GB**

(56) References cited:
**WO-A-82/00337**
**CH-A- 420 542**
**FR-A-2 481 736**
**US-A-4 108 238**
**US-A-4 183 398**

(73) Proprietor: **Future Energy AB**
**P.O.Box 6097**
**S-102 32 Stockholm (SE)**

(72) Inventor: **PLATELL, Ove Bertil**
**Tilskogsvägen 15**
**S-190 30 Sigtuna (SE)**

(74) Representative: **Omming, Allan**
**A. OMMING & CO. AB Sveavägen 28-30**
**S-111 34 Stockholm (SE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

The present invention relates to an arrangement of the kind set forth in the preamble of the following claim 1.

The comfort criterion of a heated room is the so-called directive operative temperature. The value of this temperature is determined by the radiation climate and the air temperature at selected reference points in the room. The radiation climate is affected negatively by room surfaces which are cold due to transmission losses, especially windows, since such surfaces obtain temperatures which are lower than the desired room temperature. By means of an arrangement of one or more hermetically sealed spaces, i.e. one or more so-called thermo-glass panes, it has been possible to slightly raise the temperature of the inner window-pane in relation to conventional, coupled double-glazed windows. The temperature of the inner window-pane, however, will be relatively low and the pane will have a cooling effect, if only such passive measures are taken.

A better result is obtained when the space between the innermost panes is flushed with warm air, suitably supply air or exhaust air. Because of the heat lost to the external surroundings, it is necessary for the air to flow at a high rate, so that the temperature of the flowing air, and therewith also the temperature of the innermost window-pane, does not fall beneath room temperture on the outlet side. The heat losses and the difficulties of achieving requisite flow rates in the combined space available in a window structure, which window must also be capable of being opened and has coupled frames to enable the surfaces of the glass contacted by the air to be cleaned, have meant that solutions of this kind are not totally realistic.

It is highly desirable to find a solution to the problem of maintaining the inner window-pane at a sufficiently high temperature, since test have shown that the room temperature can be lowered one or two degrees while maintaining a comfortable climate, if the radiation of cold from the window can be totally eliminated, by bringing the temperature of the inner window-pane to the same temperature as the room, or slightly higher. In this latter case, the cold-generating inner window-pane has become a heat emitter. This enables other heat-emitters in the room to be reduced in number, or to be totally omitted.

A heat emitting window of a similar type is known from the CH—A—420 542 disclosing a heat emitting body comprising heat emitting window-panes forming a closed space in which air is heated by a heating means and circulated by natural convection around an intermediate glass-pane. The necessary heat radiation is obtained, however, at a temperature difference of about 80°C between the heated air and the air to be heated at the lower portion of the window. This means that the temperature of the lower portion of the innermost window-pane will be about 90°C if the air to be heated amounts to about 10°C, which is far away from the suitable surface temperature from a comform aspect as stated in the introduction of the specification.

A solution to this problem is afforded by means of the present invention, which relates to an arrangement of the kind described in the introduction having the characterizing features set forth in the following claims. The temperature curve followed by the air circulating around the intermediate window-pane, the surface temperature of the inner window-pane and the total transmission loss are determined by a number of different parameters. Among these parameters can be mentioned the original K-value of the window, the internal radiation characteristics of the double cavity, the resistance to thermal transmission, air replacement, and the inlet temperature of the air. By passing the air (either in total or in part) through the air gap lying nearest the innermost cavity, subsequent to said air having passed the innermost air gap, the pane lying between the two cavities is held at a higher temperature than is the case when air is passed solely through the innermost cavity (in the case of a single cavity). This means that when the air passes through the innermost cavity, said air is not cooled as greatly as it would be in the case of a single cavity. Consequently the air flow can be lowered, or alternatively the inlet temperature can be lowered, while still maintaining the temperature of the innermost pane at the same level as in the single-cavity case.

At an external temperature of, for example, −20°C and a desired room temperature of, for example 20°C, the temperature of the air at the inlet to the substantially closed space need only be about 23°C, to fall to about 20°C subsequent to passing the inside of the intermediate pane. Subsequent to passing the outside of the intermediate pane, i.e. at the outlet of the space, the air temperature will have fallen to about 11°C. In order to re-heat the air to 23°C, for example by means of hot water, in an effective heat exchanger, the temperature of the water entering the heat exchanger need, ideally, only be in the region of 23.5°C, the temperature of the water exiting from the heat exchanger being, ideally, for example 11.5°C, i.e. the temperature of the return water lies far beneath the room temperature, despite the fact that the whole of the inner pane has been brought to a temperature which does not lie beneath the room temperature of 20°C.

As will readily be understood, this provides unsuspected possibilities of utilizing low-grade energy, such as low-temperature waste heat, solar energy, heat from storage batteries etc. A solar-energy collector, which may operate with an inlet temperature or outlet temperature of the circulating heat carrier of only 11—15°C or 23—27°C respectively obtains a much higher efficiency than is normally usual.

When the arrangement according to the invention is used in a building having low K-values in the walls, and optionally a heat-exchanger for the input/output-air of the building, it is thought that in many cases no further heat-emitting apparatus would be required for heating the building, in addition to the aforementioned approximately 23—27/11—15°C-water system. With a temperature differential between the ingoing and outgoing circulation-water of about 12°C, an equally large water flow can be used as is normal practice in existing buildings. Thus, when renovating such buildings, the arrangement according to the invention can be connected directly to the pipelines of the existing heating system, with or without existing radiators.

The invention will now be described in more detail with reference to a number of embodiments of arrangements according to the invention illustrated schematically in the accompanying drawings, in which

Figure 1 is a cross-sectional view of a window with a heat-exchanger incorporated in the window frame,

Figure 2 is a cross-sectional view of a window with the heat-exchanger and a fan incorporated in a window sill,

Figure 3 is a cross-sectional view of a window which is provided with two substantially sealed spaces and which is connected to a warm-air line and a return line, the return line being connected to a heating plant, and

Figure 4 is a diagram illustrating the temperature conditions in, for example, the embodiment illustrated in Figure 1.

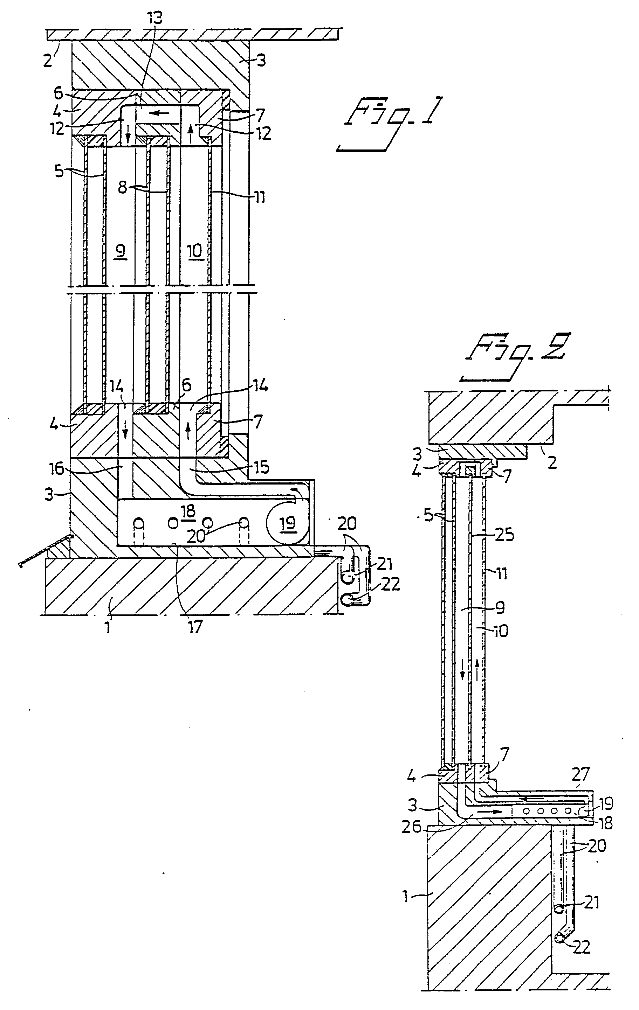

In Figure 1 there is shown an outer wall 1 having a window opening 2, in which a window frame 3 is fitted. Hung in the window frame 3 is an outer casement 4 having a conventional thermopane 5 comprising two panes of glass. Inwardly hereof are arranged two further casements 6, 7, of which the casement 6 carries a thermopane 8, comprising two glass panes, such as to form a cavity 9 between the thermopanes 5 and 8, and so as to form a cavity 10 between said thermopane 8 and an inner pane 11 fitted to the casement 7.

Between the upper parts of the casement 4 and 6 and the casements 6 and 7 are arranged deep slots 12, while channels 13 which connect the slots 12 are arranged in the upper part of the casement 6, immediately above the upper edge of the thermopane 8.

Arranged between the casements 4, 6 and 7 are through-passing slots 14, which terminate in corresponding slots 15, 16 in the lower part of the frame 3, in which frame there is also arranged a chamber 17 which connects the slots 15, 16 along practically the whole width of the window. Arranged in the chamber 17 is an elongate, highly effective counterflow heat-exchanger 18, having transversely extending, fine passages which connect the slots 15, 16, and optionally a fan means 19, which directs a relatively slow air flow up into the cavity 10, while drawing air from the cavity 9 via the heat-exchanger 18. The heat-exchanger 18 is provided, in a conventional manner, with a tube-coil 20, the ends of which are connected to a hot-water line 21 and to a return line 22 respectively.

The air heated in the heat-exchanger 18 flows slowly upwards through the slot 15, and into the cavity 10, optionally with the back-up of fan 19. As the warm air leaves the cavity 10 it passes through the slots 12 and the passage 13 in the upper part of the window, and then flows down through the cavity 9 while being cooled somewhat by the relatively cold panes 5. The cooled air is drawn down through the slot 16 and passes through the heat-exchanger 18, where it is reheated.

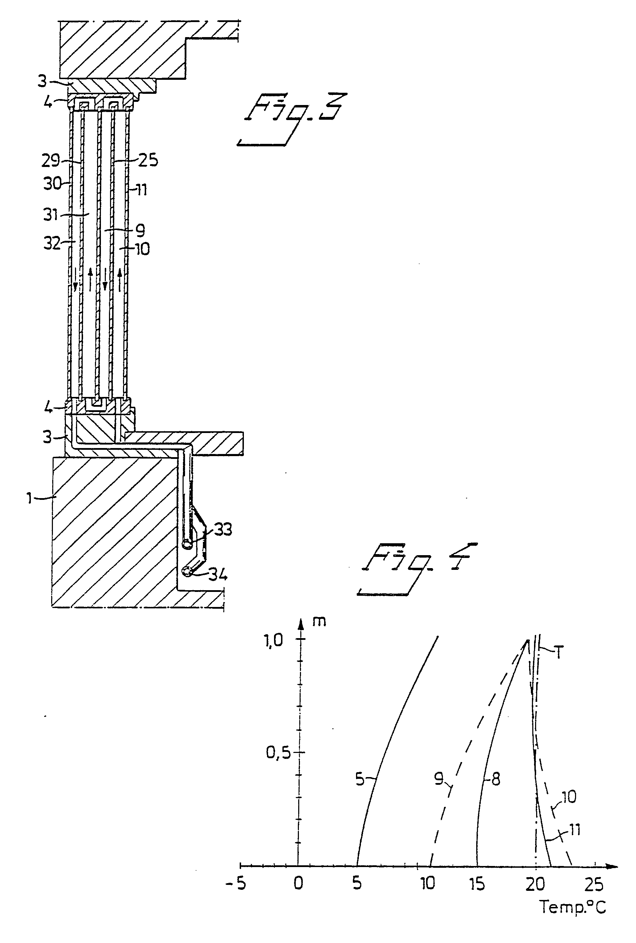

As previously described, and as will be made more clear hereinafter with reference to Figure 4, the inner window-pane 11 can be brought to a surface temperature which is almost equal to the intended room temperature of, for example, 20°C over the whole of the surface of said pane, while using a water temperature of 23—27°C in the input line, and a water temperature as low as 11—15°C in the return line.

The embodiment illustrated in Figure 2 differs from the Figure 1 embodiment, in that a single window-pane 25 is used instead of the thermopane 8 in Figure 1, and in that the heat-exchanger 18 has been moved out and placed in a chamber 26 located in a window sill 27.

The embodiment illustrated to Figure 3 has a further double-cavity 31, 32 defined by two further window-panes 29, 30 and formed in the same manner as the cavities 9, 10. Slots and passages in casements and window frame are so arranged and so connected to a hot-air passage 33 and a return passage 34 that warm air will rise up through the innermost cavity 10, down through the cavity 9, through the cavity 31, and down through the outermost cavity 32. As will be understood, the temperature difference in this case is still greater than the difference of approximately 12°C assumed in the previously described embodiments.

Figure 4 illustrates the temperature distribution from the outer window-pane 5 to the inner window-pane 11 and in the two air cavities 9 and 10 along the whole height (m) of the window. The outside temperature is assumed to be −20°C (T) and the inside temperature +20°C. The temperature of the air when flowing in to the cavity 10 is 23°C, and when exiting from the cavity 9 is only 11°C. Despite this low temperature of the inflowing air, the surface temperature of the bottom part of the inner window-pane will be 21.2°C and at the upper part of said pane 19.7°C, i.e. the temperatures practically equal to the inside temperature.

With a window of this kind, so-called cold slide will not occur, and the window will not be considered as a cold surface. When the surface temperature is raised through about 1°C, the window may also be considered as a warm surface, and if such windows are arranged in a low-energy building, additional heat-emitting devices may be more or less superfluous.

In the event of powerful solar radiation, for example in the summertime, the water temperature may, of course be lowered somewhat, in which case the window arrangement according to the invention can alternately be used to keep the room cool.

In order to prevent condensation, the cavities are ventilated to ambient air through a fine passage, in a conventional manner.

As will be understood, the fan and heat-exchanger need not be placed adjacent one another and, if so desired, the fan may be incorporated, for example, in the upper part of the window frame.

## Claims

1. An arrangement in windows for bringing the surface of an innermost window-pane (11) to a suitable surface temperature from a comfort aspect, said window-pane together with a further window-pane (5) being arranged to define a substantially closed space, wherein the air in said space flows from an inlet (15) to an outlet (16) around an intermediate window-pane (8) arranged in said space; and means (18) are arranged for heating the air prior to its entry into the cavity (10) between the innermost window-pane and the intermediate window-pane characterized in that the air is attempered to a temperature which at most differs some few degrees from the temperature of the room air on the inside of the window, in addition to which means (19) for causing the air to move is arranged to control the rate of flow of said air, so that the attempered air when exiting from the cavity (10) between the innermost window-pane and the intermediate window-pane has a temperature substantially equal to the temperature of the room air on the inside of the window.

2. An arrangement according to Claim 1, characterized in that all of the intermediate window-pane (8) comprises a thermopane.

## Patentansprüche

1. Anordnung an Fenstern, um die Oberfläche einer innersten Fensterscheibe (11) auf eine unter dem Behaglichkeitsaspekt geeignete Oberflächentemperatur zu bringen, wobei die genannte Fensterscheibe zusammen mit einer weiteren Fensterscheibe (5) eine Anordnung zur Bildung eines im wesentlichen geschlossenen Raums aufweist, die Luft in diesem Raum von einem Einlaß (15) zu einem Auslaß (16) um eine in diesem Raum angeordnete Zwischenfensterscheibe (8) herum strömt und Mittel (18) zum Erwärmen der Luft vor ihrem Eintritt in den Hohlraum (10) zwischen der innersten Fensterscheibe und der Zwischenfensterscheibe vorgesehen sind, dadurch gekennzeichnet, daß die Luft auf eine Temperatur, die höchstens einige wenige Grade von der Temperatur der Raumluft auf der Innenseite des Fensters differiert, temperiert wird, wozu zusätzlich Mittel (19) zur Zwangsbewegung der Luft und für eine Regulierung der Strömungsgeschwindigkeit dieser Luft vorgesehen sind, derart, daß die temperierte Luft beim Austreten aus dem Hohlraum (10) zwischen der innersten Fenterscheibe und der Zwischenfensterscheibe eine Temperatur aufweist, die im wesentlichen gleich der Temperatur der Raumluft auf der Innenseite des Fensters ist.

2. Anordnung nach Anspruch 1, dadurch gekennzeichnet, daß sämtliche Zwischenfensterscheiben (8) eine Isolierverglasung aufweisen.

## Revendications

1. Agencement de fenêtres pour amener la surface de la vitre la plus intérieure (11) à une température superficielle convenable du point de vue confort, ladite vitre en même temps qu'une autre vitre (5) étant disposées de façon à dèfinir un espace sensiblement fermé, dans lequel l'air circule depuis une entrée (15) jusqu'à une sortie (16) en contournant une vitre intermédiaire (8) placée dans ledit espace; et dans lesquel des moyens (18) sont disposés de façon à chauffer l'air avant qu'il pénètre dans la cavité (10) entre la vitre la plus intérieure et la vitre intermédiaire, caractérisé en ce que l'air est tempéré jusqu'à une température qui diffère au plus de quelquesdeg-rés de la température de l'air de la pièce sur la face intérieure de la fenêtre, et qu'en plus, des moyens (19) provoquant le déplacement de l'air sont disposés de façon à commander le débit de la circulation de l'air afin que l'air tempéré au moment où il sort de la cavité (10) entre la vitre la plus intérieure et la vitre intermédiaire se trouve à une température sensiblement égale à la température de la pièce sur la face intérieure de la fenêtre.

2. Agencement selon la revendication 1, caractérisé en ce que la totalité de la vitre intermédiaire (8) est constituée d'un vitrage isolant.

*Fig.1*

*Fig.2*

1

Fig.3

Fig.4